# EUROPEAN PATENT APPLICATION

(11) **EP 1 589 699 A2**
(43) Date of publication of application: **26.10.2005**
(21) Application number: 05004738.0
(22) Date of filing: 03.03.2005
(51) Int. Cl.: H04L 12/28

(54) **Systems and methods for integrated control within a home entertainment system**

(30) Priority: 19.04.2004 US 826277
(71) Applicant: Broadcom Corporation, Irvine, California 92618-7013 (US)
(72) Inventor: Bennett, James D., Irvine California 92618-7013 (US); Karagouz, Jeyhan, Irvine California 92606 (US)
(74) Representative: Jehle, Volker Armin

(57) **Abstract**

Integrated control systems and methods for control of distributed home entertainment electronic devices are provided. In an embodiment, an integrated control system provides for control of distributed home entertainment electronic devices using a home wireless or wireline network. In an embodiment, an integrated control system includes a controller for managing its operation, a translator for translating management instructions into management messages using a preferred communications protocol, and a device database coupled to the controller for storing device information that includes device characteristics and configuration information. The integrated control system also includes one or more wireless or wireline interfaces. Methods are provided to control distributed home entertainment electronic devices and to distribute video and audio signals. A legacy television dongle is provided to support the integration of legacy televisions into a system of distributed home entertainment electronic devices under the control of an integrated control system.

## Description

### BACKGROUND OF THE INVENTION

### Field of Invention

The present invention relates to home entertainment systems, and more particularly to integrated control of distributed home entertainment electronic devices.

### Background Art

Home entertainment electronic devices have proliferated. A typical household contains multiple home entertainment electronic devices, such as televisions, compact disk players, DVD players, TIVO players, audio/video receivers, video cassette recorders (VCRs), set top boxes, and satellite receivers. Additionally, other types of home electronic devices are increasingly common, such as electronic refrigerators, ovens, video surveillance systems, alarm systems, baby monitoring systems and the like.

At the same time economical wireless and wireline home networking capabilities are emerging. Types of wireless networks can include Bluetooth, IrDA, and Wi-Fi devices. Bluetooth operates around the 2.45 Ghz frequency band, and provides a standard for short distance wireless communications between electronic devices. IrDA (Infrared Data Association) is a standard for electronic devices to communicate using infrared light pulses. Wi-Fi devices are both based on the wireless Ethernet specification, known as IEEE 802.11. Wi-Fi originally was targeted more for office environments, and was developed by the Wireless Ethernet Compatibility Alliance (WECA). Wi-Fi is essentially a seal of approval that indicates a device is compatible with IEEE 802.11 (b). Wi-Fi devices also support longer range communications ranging from 100 to more than 300 meters. Additionally, enhanced versions of these standards are being developed to more effectively support video signals. For example, the IEEE 802.11 (a) with MAC enhancements for supporting video has been achieved in IEEE 802.11 (e). Furthermore, an ultra-wide band wireless personal area networking standard, IEEE 802.15.3a that can support high data rates is emerging that can be used for supporting video signals.

Types of wireline networks can include traditional wireline networks using twisted copper pairs, coaxial cable or fiber optics. Additionally, wireline networks can include emerging powerline networks. There are a number of competing powerline technologies, such as Passport, which was developed by Intelogis and a newer technology referred to PowerPacket, which was developed by Intellon. The PowerPacket technology has been recently selected by the HomePlug Alliance, an industry association, as the standard for power-line networking. Powerline networks provide communication paths over existing electrical wiring within a house or office.

While alternative home networking approaches have been emerging and electronic devices have been proliferating, capabilities of televisions and other home entertainment electronic devices have greatly expanded. For example, televisions are quickly migrating from being typically analog devices to digital devices that support a multitude of video formats. Likewise various audio standards are emerging, and being supported by sophisticated audio and audio/video receivers.

The plethora of programming, integration and control choices that a user faces when using distributed home entertainment electronic devices is often daunting and frustrating. For example, multiple remote controls are often needed. Those remote controls do not support easy integrated control. Moreover, as a user changes channels on a digital television, the video input formats often change from one channel to the next forcing the user to adjust viewing and audio modes on electronic devices, to avoid picture distortions or audio crackling.

Furthermore, as these technologies have developed, previewing, integration and selection capabilities for video signals have lagged behind, and remain relatively primitive. Current video previewing and selection mechanisms do not take full advantage of the migration to digital technologies and the added processing power in televisions and set top boxes. A co-pending application entitled, *Television Channel Selection Canvas* (Attorney Docket No.: 1875.4960000), filed on the same date as the present application, which is incorporated herein by reference in its entirety addresses the previewing and selection needs by providing a user interface mechanism for allowing a user to conveniently preview video signals and select a video to be viewed. This provides a portion of the solution to addressing user frustrations with complicated distributed home entertainment electronic devices.

What is still needed is a integrated control system for control of distributed home electronic devices.

### SUMMARY OF THE INVENTION

The present invention provides integrated control systems and methods for control of distributed home entertainment electronic devices. In an embodiment, an integrated control system includes a controller for managing its operation, a translator for translating management instructions into management messages using a preferred communications protocol, a device database coupled to the controller for storing device information that includes device characteristics, configuration information and/or user preferences. The integrated control system also includes one or more wireless or wireline interfaces that support integration of distributed home entertainment electronic devices. Wireless interfaces supported include, but are not limited to Bluetooth, IrDA, SWAP, and Wi-Fi. Wireline interfaces supported include, but are not limited to Ethemet protocols supported over twisted pair, coaxial cable, and fiber optic cable; and powerline technologies, such as PowerPacket and Passport technologies.

Methods are provided to control distributed home entertainment electronic devices and to distribute video and audio signals. In one embodiment, a method is provided to relay remote control signals from one device to another. In another embodiment, hierarchical control of distributed home entertainment electronic devices is provided. In a further embodiment, a method to encode video signals received by one device and transmit the video signals using a wireless or wireline interface are provided. In yet another embodiment, device settings are automatically determined and transmitted based on a change in a video input signal to optimize one or more settings on one or more electronic devices.

An legacy television dongle is also provided to support the integration of legacy televisions into a system of distributed home entertainment system under the control of an integrated control system or similar device. In one embodiment, the legacy television dongle includes a wireless interface for receiving digital video signals from an integrated control system, a video transcoder for converting the received digital video signals to a video signal supported by a legacy television, and a UHF/VHF interface for coupling with the legacy television and transmitting the converted video signal. A method is provided for distributing video signals using a legacy television dongle.

According to an aspect of the invention, an integrated control system for control of distributed home entertainment electronic devices is provided, comprising:
a controller for managing the operation of said integrated control system;
a translator coupled to said controller for translating management instructions into management messages using a preferred communications protocol;
a device database coupled to said controller for storing device information;
at least one communications interface coupled to said controller for transmitting and receiving management messages to distributed home entertainment electronic devices.

Advantageously, said at least one communications interface includes a wireless interface.

Advantageously, said at least one communications interface includes an IEEE 802.11 (b) interface.

Advantageously, said at least one communications interface includes an IEEE 802.11 (e) interface.

Advantageously, said at least one communications inferface includes an IEEE 802.15.3a interface.

Advantageously, said at least one communications interface includes a wireline interface.

Advantageously, said at least one communications interface includes a powerline interface.

Advantageously, said at least one communications interface includes both a wireline and a wireless interface.

According to an aspect of the invention, a method to control distributed home entertainment electronic devices is provided, comprising:
(a) receiving a remote control signal;
(b) interpreting said remote control signal;
(c) gathering device information for devices impacted by said remote control signal;
(d) translating said remote control signal into a management command;
(e) encoding a management message based on the management command; and
(f) transmitting said management message.

Advantageously, said device information includes a type of communication protocol supported by a device.

Advantageously, said device information includes a unique identifier for a device that can be used to route management messages.

Advantageously, step (e) includes encoding a management message using a wireless protocol.

Advantageously, said wireless protocol is IEEE 802.11 (b).

Advantageously, said wireless protocol is IEEE 802.11 (e).

Advantageously, said wireless protocol is IEEE 802.15.3a.

Advantageously, said wireless protocol is Bluetooth.

According to an aspect of the invention, a method to provide hierarchical control of distributed home entertainment electronic devices is provided, comprising:
(a) receiving a remote control signal;
(b) interpreting said remote control signal;
(c) gathering device configuration information for devices that may be impacted by said remote control signal;
(d) determining management command based on said remote control signal and said device configuration information;
(e) encoding a management message based on said management command; and
(f) transmitting said management message.

According to an aspect of the invention, within a home entertainment system containing a television and other distributed electronic devices, a method of automatically configuring the distributed electronic devices upon a change in a video input signal is provided; comprising
(a) determining a change in a video input signal;
(b) analyzing the characteristics of the video input signal;
(c) determining whether settings of the distributed electronic device should be changed;
(d) when settings should be changed, generating management messages for each device to be changed; and
(e) transmitting said management messages.

According to an aspect of the invention, a method for distributing video signals from a first electronic device receiving multiple video streams to a second electronic device is provided, comprising:
(a) receiving a video channel request;
(b) encoding a video message that contains video from the requested video channel;
(c) transmitting the encoded video message from the first electronic device to the second electronic device.

Advantageously, said first electronic device is a cable set top box.

Advantageously, step (b) comprises encoding a video message using IEEE 802.11 (b) protocol.

Advantageously, step (b) comprises encoding a video message using IEEE 802.11(e) protocol.

Advantageously, step (b) comprises encoding a video message using IEEE 802.15.3a protocol.

Advantageously, step (b) comprises encoding a video message using Bluetooth.

Advantageously, step (b) comprises encoding a video message using a powerline protocol.

Advantageously, step (b) comprises encoding a video message using an Ethernet protocol.

According to a aspect of the invention, a legacy television dongle is provided, comprising:
a wireless interface for receiving digital video signals;
a UHFNHF interface for transmitting analog video signals to a legacy television;
a remote interface for receiving user commands; and
a video transcoder coupled to said digital video interface, said UHF/VHF interface and said remote interface for converting video signals between different formats.

Advantageously, said wireless interface is an IEEE 802.11 (b) interface.

Advantageously, said wireless interface is an IEEE 802.11(e) interface.

Advantageously, said wireless interface is an IEEE 802.15.3a interface.

Advantageously, said wireless interface is a Bluetooth interface.

Advantageously, said video transcoder receives said digital video signals from said wireless interface and translates said digital video signals into analog video signals.

Advantageously, said wireless interface receives said user commands from said remote interface and translates said user commands into management messages using a wireless protocol.

Advantageously, said legacy television dongle comprises a mechanical mount for affixing said legacy television dongle to a UHF/VHF antenna connector on a legacy television.

According to an aspect of the invention, a legacy television dongle is provided, comprising:
a wireless interface for receiving digital video signals;
a UHFNHF interface for transmitting analog video signals to a legacy television;
a remote interface for receiving user commands; and
a video transcoder coupled to said digital video interface, said UHF/VHF interface and said remote interface;
a control signal transcoder coupled to said remote interface and said wireless interface; and
a control signal database coupled to said control signal transcoder.

According to an aspect of the invention, a method of receiving digital video signals on a legacy analog television using a legacy television dongle is provided, comprising:
(a) receiving a digital wireless video signal by the wireless legacy television dongle;
(b) decoding the digital wireless video signal;
(c) encoding an analog video signal from the digital wireless video signal; and
(d) transmitting the analog video signal from the wireless legacy television dongle to the legacy analog television using a UHF/VHF interface.

Further embodiments, features, and advantages of the present inventions, as well as the structure and operation of the various embodiments of the present invention, are described below.

### BRIEF DESCRIPTION OF THE FIGURES

The invention is described with reference to the accompanying drawings. In the drawings, like reference numbers indicate identical or functionallysimilar elements. The drawing in which an element first appears is indicated by the left-most digit in the corresponding reference number.

FIG. 1 is a diagram of distributed home entertainment electronic devices within a home, according to an embodiment of the invention.

FIG. 2 is diagram of an integrated control system for control of distributed home entertainment electronic devices, according to an embodiment of the invention.

FIG. 3 is a flow chart of a method to control distributed home entertainment electronic devices, according to an embodiment of the invention.

FIG. 4 is a flow chart of a method to provide hierarchical control of distributed home entertainment electronic devices, according to an embodiment of the invention.

FIG. 5 is a flow chart of a method to configure distributed electronic devices upon a change in a video input signal within a home entertainment system containing a television, according to an embodiment of the invention.

FIG. 6 is a flow chart of a method for distributing video signals from a first electronic device capable of receiving multiple video streams to a second electronic device, according to an embodiment of the invention.

FIG. 7 is a legacy television dongle, according to an embodiment of the invention.

FIG. 8 is a flow chart of a method of receiving digital video signals on a legacy analog television using a legacy television dongle, according to an embodiment of the invention.

### DETAILED DESCRIPTION OF THE INVENTION

While the present invention is described herein with reference to illustrative embodiments for particular applications, it should be understood that the invention is not limited thereto. Those skilled in the art with access to the teachings provided herein will recognize additional modifications, applications, and embodiments within the scope thereof and additional fields in which the present invention would be of significant utility.

In particular, for ease of illustration, invention embodiments are primarily discussed in the context of a residential setting. However, the invention is not limited to use in a residential setting. The invention could be used in any setting where distributed home entertainment electronic devices are used, such as but not limited to, an office or other business location.

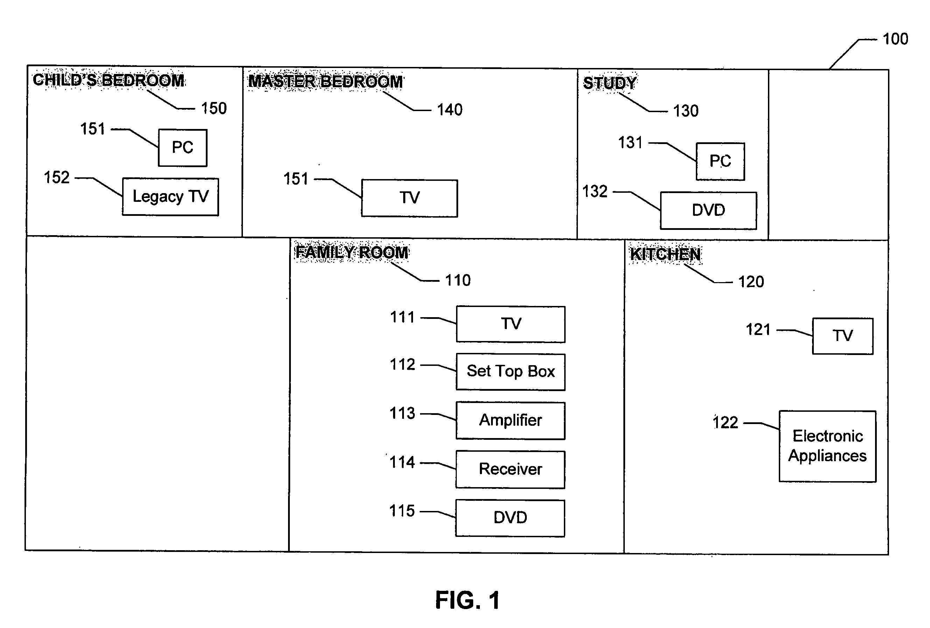

FIG. 1 is diagram of distributed home entertainment electronic devices within home 100, according to an embodiment of the invention. Home 100 includes family room 110, kitchen 120, study 130, master bedroom 140 and child's bedroom 150. These rooms may be on a single floor or multiple floors within a home. Many configurations and distributions of home entertainment electronic devices can exist. Home 100 provides a simple example for illustration purposes, and is not intended to limit the scope of the patent application.

As is common in many homes today, distributed home entertainment electronic devices are located throughout home 100. Specifically, family room 110 includes television 111, set top box 112, amplifier 113, receiver 114 and DVD player 115. Family room 110 represents the primary home entertainment location in home 100. Within family room 110, set top box 112 receives a cable television input over a coaxial cable from the cable provider's headend distribution point. Set top box 112 can be coupled to receiver 114. Receiver 114 can also be coupled to DVD player 115, amplifier 113 and television 111. Receiver 114 receives video and audio signals from set top box 112 and DVD player 115. Upon receiving these signals, receiver 114 processes the signals and transmits them to the appropriate electronic device. For example, video signals would be transmitted to television 111 and audio signals could be transmitted to amplifier 113, which is turn would process the audio signal and transmit the audio signals to speakers (not shown). The above description is one example of a wide range of device configurations that are possible. Additionally, other types of electronic devices can be included, such as a tape deck, a VHS tape player, a TIVO player, or a personal video recorder (PVR). Coupling of TV 111, set top box 112, amplifier 113, receiver 114 and DVD player 115 can include coaxial cable, fiber or copper wire. Encoding schemes for exchanging video data can include, for example, S-Video and composite video encoding

Home entertainment electronic devices are distributed throughout the remainder of home 100. Specifically, kitchen 120 includes television 121 and electronic appliances 122. Electronic appliances can include an oven, refrigerator and the like. Study 130 includes personal computer 131 and DVD player 132. Master bedroom 140 includes television 151. Child's bedroom 150 includes personal computer 151 and legacy television 152. Legacy television 152 refers to a television that is not cable ready and receives video inputs through the use of a VHF/UHF interface or antenna to receive broadcast television signals. A legacy television can also refer to a television that includes a VHF/UHF antenna connector, but is not equipped with an integrated control system or other software/hardware to support interactions with an integrated control system.

Current approaches to manage and control distributed home entertainment electronic devices, such as those located in home 100, are often limited and cumbersome. For example, when a user within family room 110 wishes to watch a football game on TV 111 he may need to use a remote control to change the received channel on the set top box, a second remote control to change the viewing mode on the television and a third remote control to adjust the receiver to provide Dolby surround sound audio in stadium listening mode. The use of multiple remotes to make these adjustements is often cumbersome. Furthermore, if the user wishes to switch channels from one football game to another, the video signals may be different. For example, one could be an HDTV signal, while the other might be a non-HDTV signal. Thus, to avoid video and audio distortion the user may need to use multiple remotes again to adjust the settings each time he switches between football games.

An additional limitation is that the user in family room 110 can not remotely control devices elsewhere in the house. For example, if the user in family room 110 wants to get the attention on an individual located in study 130, which may be located upstairs, listening to DVD player 132 with the volume turned up it would be difficult to do so without physically going to study 130. In this case the user in study 130 would likely not hear the calls from a user in family room 110. Using the present invention, the user in family room 110 could transmit a relayed remote control signal that would turn down the volume of DVD player 132, so the user listening to DVD player 132 could hear his calls.

The present invention addresses these limitations through the use of an integrated control system that leverages the proliferation of in-home networks (e.g., wireless and powerline networks) and more powerful integrated circuitry within home entertainment electronic devices. The integrated control system, for example, can be used to relay remote control signals from one device to another, provider hierarchical control of devices, automatically adjust device settings in response to changes in video inputs, automatically adjust device settings to correspond to user preferences, and create an in-home video, audio and management signal distribution system to reduce the need for multiple cable set top boxes and/or satellite receivers.

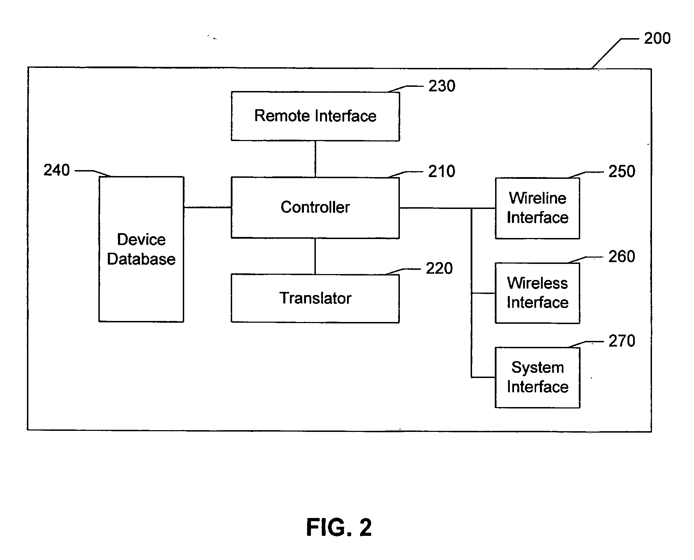

FIG. 2 is a diagram of integrated control system 200 for control of distributed home entertainment electronic devices, according to an embodiment of the invention. Integrated control system 200 provides a system to integrate the control and management of distributed home entertainment electronic devices throughout a home, such as home 110. Integrated control system 200 manages distributed home electronic devices by formulating and transmitting management messages using either wireless (e.g. IEEE 802.11(b), 802.11(e), or Bluetooth) or wireline communications (e.g., powerline communications). Integrated control system 200 can be included within a television, a set top box, a satellite receiver or other distributed electronic device that can serve as a central control unit for integrating distributed electronic device operation. Emerging televisions and set top boxes can include television functionality on a chip (TVOC), as is disclosed in co-pending patent application entitled *Television Functionality on a Chip,* Ser. No. 10/791686, filed March 3, 2004 ("TVOC Application"), which is incorporated herein in its entirety by reference. When a TVOC exists, integrated control system 200 can be included within the TVOC, as would be known by individuals skilled in the relevant arts based on the disclosures herein and within the TVOC application.

Integrated control system 200 includes controller 210, translator 220, remote interface 230 and device database 240. Integrated control system 200 also includes wireline interface 250, wireless interface 250 and system interface 270.

Controller 210 manages the operation of integrated control system 200. Specifically, controller 210 receives remote control signals from remote interface 230. Controller 210 can also receive interrupts and messages from the other interfaces indicating a change in system settings or input signal changes. Controller 210 interprets these signals to generate management instructions. In interpreting these signals, controller 210 accesses device information contained within device database 240. Controller 210 provides the management instructions along with the appropriate communications protocol to be used to formulate a management message to translator 220. Upon receiving an encoded management message back from translator 220, controller 210 provides the management message to wireless interface 250 or wireline interface 260 for transmitting to the appropriate device.

Translator 220 is coupled to controller 210, and translates management instructions into management messages using the appropriate communications protocol.

Remote interface 230 is coupled to controller 210, and receives remote control signals from a remote control device. Remote control signals can include signals to change a television channel, change volume, power devices on/off and other control signals typically used to control devices within a home entertainment system. A remote control device can be any device that wirelessly communicates information to integrated control system 200 for management and control of a distributed home entertainment electronic devices supported by integrated control system 200. Examples of remote control devices include traditional television remote controls or universal remote controls. Additionally, personal data assistants (PDAs), cellular phones, and the like with wireless interfaces can also be used as a remote control device.

Device database 240 is coupled to controller 210, and stores information regarding the capabilities and status of electronic devices under the management of integrated control system 200. For example, device database 240 can include the types of interfaces supported by a device, the power on/off status of a device, and routing information, such as unique identifiers for each electronic device, for messages in a system of distributed home electronic devices. Device database 240 can include the capabilities of a particular device. For example, device database 240 can contain the audio formats a receiver supports. Device database 240 can also include preferred settings for electronic devices within the distributed home entertainment system. For example, device database 240 could contain preferred configurations whenever a football game or HBO movie is being viewed. In the case of the football game, the configuration information might be such that the receiver is configured to a stadium audio setting and a preferred volume is set. Likewise in the case of the HBO movie, configuration information might include information that automatically configures the receiver for surround sound audio and sets the television to display the movie in a 16x9 aspect format.

System interface 270 provides an interface for communications between integrated control system 200 and the device in which it is located.

Wireline interface 250 provides wireline interfaces between integrated control system 200 and electronic devices under its control. Wireline interfaces can include an Ethernet interface, powerline interfaces, and other interfaces that can be used to support wireline communications between integrated control system 200 and devices under its control. Similarly, wireless interface 260 provides wireless interfaces between integrated control system 200 and electronics devices under its control. Wireless interface 260 can include Bluetooth interfaces, IEEE 802.11(b), IEEE 802.11(e) interfaces, and other wireless interfaces that can be used to support wireless communications between integrated control system 200 and devices under its control.

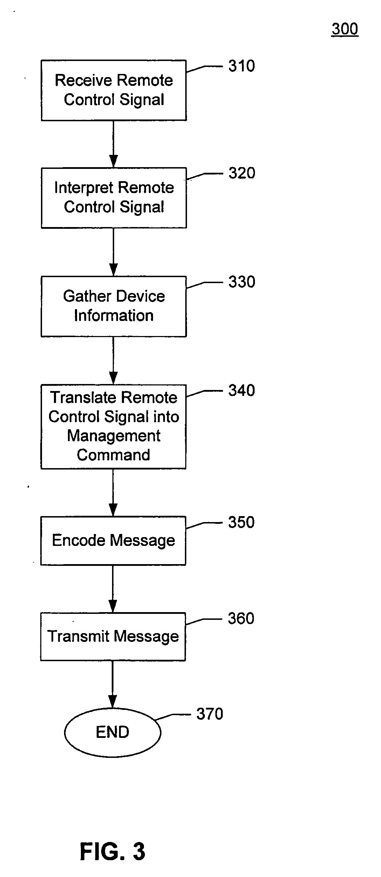

FIG. 3 is a flow chart of method 300 that controls distributed home entertainment electronic devices, according to an embodiment of the invention. Method 300 provides a method to relay remote control instructions between devices. Method 300 begins in step 310. In step 310 a remote control signal is received. For example, remote interface 230 within integrated control system 200 can receive a remote control signal from a user.

In step 320 the remote control signal is interpreted. For example, controller 210 can interpret the remote control signal to determine the type of action being requested. The type of action may be to change a channel, to view what is being played on a television in another room, to turn the volume down on a DVD player in anotherroom, or to display a television channel selection canvas and gather the needed information.

In step 330 device information is gathered. In one embodiment, controller 210 can request device information from device database 240. Thus, for example, if a request to increase the volume is received, device database 240 would provide information to controller 210 on the type of interface to use and relevant receiver 114 capabilities.

In step 340 the remote control signal is translated into a management command. For example, upon receiving the device information, controller 210 can determine what management command or commands need to be sent to the affected device.

In step 350 a management message is encoded. In one embodiment, translator 220 encodes a management message based on the management commands and the preferred interface for the device. For example, in one instance receiver 114 may be coupled to integrated control system 210 via a Bluetooth connection, while in another scenario a powerline interface may be used. The appropriate message would be encoded based on the type of interface to be used.

In step 360 a management message is transmitted. For example, controller 210 would provide the encoded management message to the appropriate interface, such as wireless interface 260 or wireline interface 250. The interface, for example, wireless interface 260 would then transmit the message using the preferred protocol, such as Bluetooth or other wireless protocol. In step 370 method 300 ends.

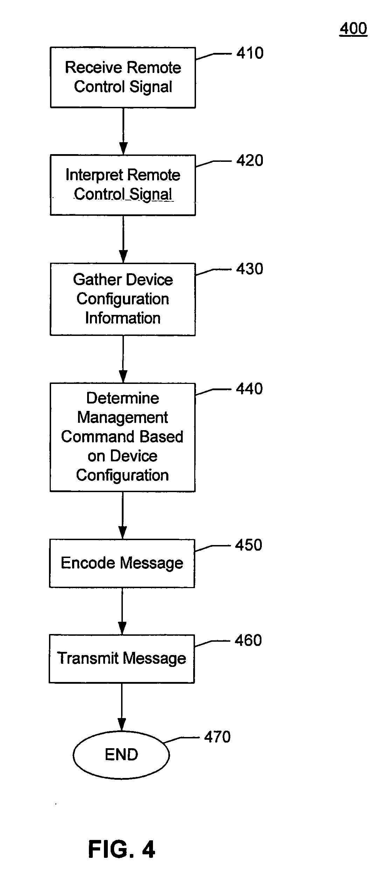

FIG. 4 is a flowchart of method 400 that provides hierarchical control of distributed home entertainment electronic devices, according to an embodiment of the invention. Method 400 is similar to method 300, except that method 400 also considers device configuration information (i.e., how devices are configured within the overall system of distributed home entertainment electronic devices) and supports transmission of multiple management messages to multiple devices to effect a requested change by a user.

Method 400 begins in step 410. In step 410 a remote control signal is received. For example, remote interface 230 within integrated control system 200 can receive a remote control signal from a user.

In step 420 the remote control signal is interpreted. For example, controller 210 can interpret the remote control signal to determine the type of action being requested. The type of action may be to change a channel, to view what is being played on a television in another room, to turn the volume down on a DVD player in another room, or to display a television channel selection canvas.

In step 430 device configuration information is gathered. In one embodiment, controller 210 can request device configuration information from device database 240. Thus, for example, if a request to increase the volume of a television channel being viewed, device database 240 would provide information to controller 210 on the device or devices that should be adjusted based on the device configuration, and the type of interface to use and relevant device capabilities for all affected devices. In this way, a user does not have to manually adjust multiple devices. Instead integrated control system 200 can automatically make this determination.

In step 440 the remote control signal is translated into one or more management commands for one or more devices. For example, upon receiving the device information, controller 210 can determine what management command or commands need to be sent to the affected devices.

In step 450 one or more management messages are encoded. In one embodiment, translator 220 encodes management messages based on the management commands and the preferred interfaces for the devices. For example, one affected device may be coupled to integrated control system 210 via a Bluetooth connection, while another affected device is coupled via a powerline connection. The appropriate messages would be encoded based on the type of interfaces to be used.

In step 460 one or more management messages are transmitted. For example, controller 210 would provide the encoded messages to the appropriate interfaces, such as wireless interface 260 or wireline interface 250. The interfaces would then transmit the message using the preferred protocols for each affected device. In step 470 method 400 ends.

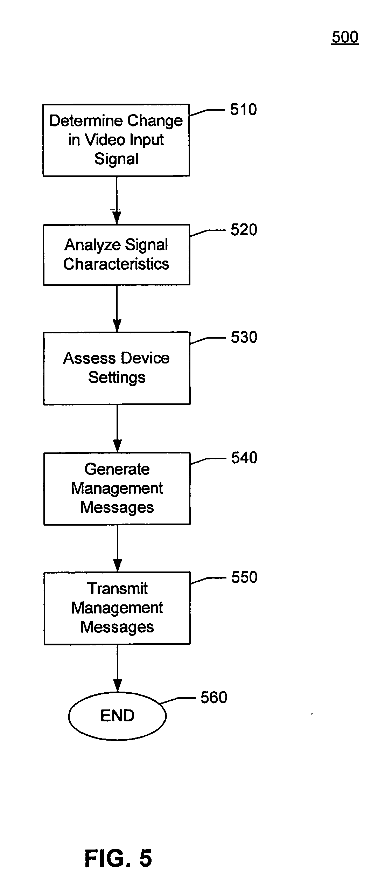

FIG. 5 is a flowchart of method 500 that configures distributed electronic devices upon a change in a video input signal within a home entertainment system containing a television, according to an embodiment of the invention. Method 500 begins in step 510. In step 510 a change in a video input signal is determined. For example, controller 210 within integrated control system 200 can receive an indication through system interface 270 that a video signal change has occurred. The indication could also be received through one of the other interfaces. In other embodiments, method 500 can be used to automatically transmit management messages to control devices upon determination of a change in the audio format or other type of change.

In step 520, the video input signal characteristics are analyzed. In one embodiment controller 210 can examine the new video input signal to determine its characteristics, such as whether the signal is analog or digital, the aspect ratio, the digital format (e.g., 480i, 480p, 1080i, or 720p), what type of audio format is being used (e.g., Dolby Digital, Digital Theater System (DTS), or Sony Dynamic Digital Sound (SDDS)).

In step 530, the device settings are assessed. In one embodiment, controller 210 can request device configuration information from device database 240. Thus, for example, if a change in the video input signal was received, controller 240 could request information related to the affected video display device, for example, TV 111. Device database 250 would then provide the device configuration information for TV 111. In another embodiment, upon receiving a change in a video signal, controller 210 can generate management messages to query the potentially affected device to gather device configuration information. In a further embodiment, user preferences can be stored in device database 240. In this case, when a change is detected controller 210 can access personal preferences based on, for example, the channel (e.g., CNBC, ESPN, Discovery Channel), the time of day, or the type of programming (e.g., movie, soap opera, sporting event). Personal preferences can include the video format, volume, type of audio format, or other device settings. In all cases, controller 210 would analyze the present device settings to determine whether a change in the device settings needs to occur.

In step 540 management messages are generated. For example, based on an assessment of the present settings of the potentially affected devices, controller 210 would generate management commands. These management commands would then be encoded using the preferred communications protocol.

In step 550 management messages are transmitted. As in methods 300 and 400, these messages would be transmitted over the appropriate interface to the affected devices. The messages sent could include one or more messages sent to one or more electronic devices, depending on the nature of the change in the received input signal. In step 560 method 500 ends.

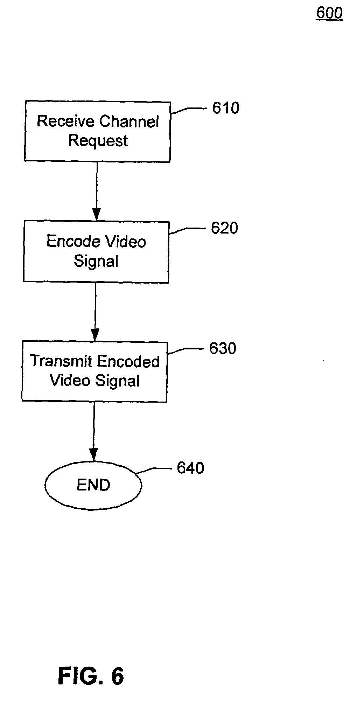

FIG. 6 is a flow chart of method 600 that distributes video signals from a first electronic device capable of receiving multiple video streams to a second electronic device, according to an embodiment of the invention. The proliferation of digital television sets makes it feasible for televisions or set top boxes to receive and decode multiple video input streams simultaneously. Method 600 seeks to take advantage of this evolution in televisions and set top boxes to more efficiently distribute video signals within distributed home entertainment electronic devices.

Method 600 begins in step 610. In step 610 a video channel request is received. For example, in home 100 an integrated control system, such as integrated control system 200 can be located in set top box 112. Integrated control system 200 can receive a video channel request from television 151. In this example, set top box 112 can have the ability to simultaneously receive and decode multiple video input streams, while television 151 may not be directly connected to a cable outlet or satellite receiver. The video channel request can be received on either wireline interface 250 or wireless interface 260, using a wide variety of wireless or wireline communication protocols.

In step 620 the video signal contained within the video channel requested is encoded. For example, controller 210 can receive the requested video input signal through system interface 270. Controller 210 would also request device configuration information from device database 240 to determine the optimal interface and encoding to use to encode the video signal. Controller 210 would also gather device configuration information regarding television 151, such as the type of video formats supported so that the optimal video format could be used. Controller 210 would provide the device configuration information to Translator 220. Based on the device configuration information (e.g., supported video formats and interfaces available), translator 220 would optimize the message encoding to encode the video signal. In step 630 the encoded video signal is transmitted. For example, the video signal can be transmitted over wireline interface 250 or wireless interface 260. In step 640 method 600 ends.

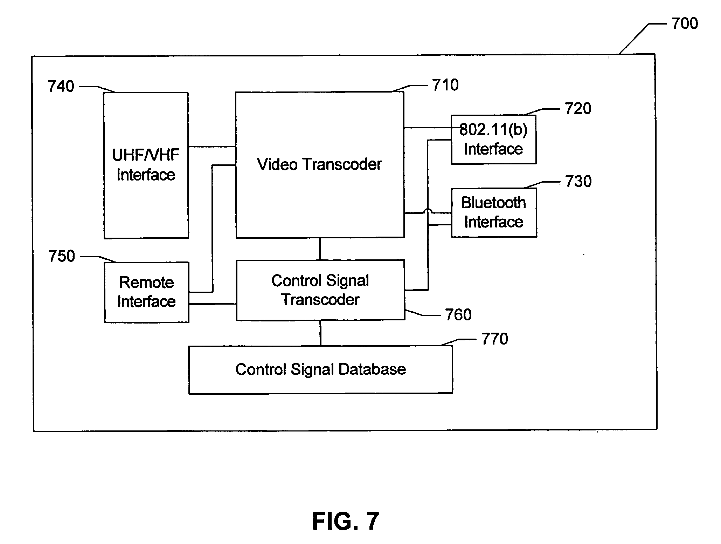

FIG. 7 provides legacy television dongle 700, according to an embodiment of the invention. Legacy television dongle 700 can be used with televisions that are not cable ready to enable them to receive more channels than broadcast over-over-the-air channels. Additionally, legacy television dongle can be used to retrofit existing digital televisions and cable ready televisions with an integrated control system, such as integrated control system 200. Dongle 700 can be affixed using a mechanical mount or connection to the UHF/VHF antenna jack on a television, as would be known by individuals skilled in the relevant arts.

Dongle 700 includes video transcoder 710, IEEE 802.11(b) interface 710, Bluetooth interface 730, and UHF/VHF interface 740. Additionally, Dongle 700 includes remote interface 750, control signal transcoder 760 and control signal database 770. In a further embodiment, video transcoder 710 can include a video message buffer. The buffer can be used to ensure a continuous video stream to ensure a high quality video signal for transmission to the television which dongle 700 is attached. In an alternative embodiment focused only on receiving video signals, control signal transcoder 760 and control signal database 770 do not exist.

IEEE 802.11 (b) interface 720 and Bluetooth interface 730 can be used to receive encoded video or control signals. For example, an encoded video signal can be received by these interfaces from an integrated control system, such as integrated control system 200. Interfaces 720 and 730 can be coupled to both video transcoder 710 and control signal transcoder 760. In alternative embodiments, either one of the interfaces can exist. Also, other wireline and wireless interfaces can be included.

Upon receiving an encoded video message, the interface provides the encoded video message to video transcoder 710. Video transcoder 710 converts the received encoded video signal into a broadcast video signal for display by the television for which dongle 700 is attached. Additionally, in an embodiment that does not contain a control signal transcoder, video transcoder 710 is also used to receive requests to change a channel and encode those requests. Video transcoder is coupled to UHF/VHF interface 740 and remote interface 750. UHF/VHF interface 740 is coupled to the UHFNHF antenna jack on a television and provides the physical connection and signal coupling to the television.

Remote interface 750 provides at least two functions. Remote interface 750 can be used to receive remote control signals from a user to determine what channel is being requested. Remote interface 750 can also be coupled to the remote interface on a television to direct control signals received by dongle 700 from another sources, such as integrated control system 200. The approaches for coupling of remote interface 750 to a remote interface on a television will be known to individuals skilled in the relevant arts.

Control signal transcoder 760 is coupled to remote interface 750, control signal database 770, video transcoder 710, and interfaces 720 and 730. Control signal transcoder 760 is used to interpret and encode control messages. Control signal database 770 can include coding mappings that are used by control signal transcoder 760 to interpret, decode and encode control messages. With respect to control signals, when a control message is received from a remote device over interface 720 or 730, control signal transcoder 760 interprets that message and instructs remote interface 750 to provide a remote control signal to the remote interface on the television for which dongle 700 is attached.

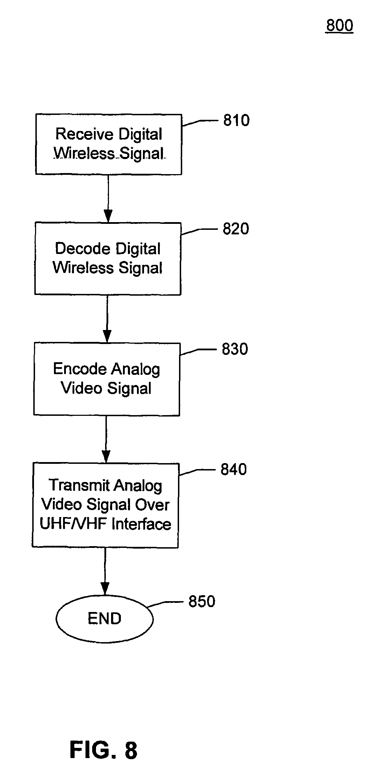

FIG. 8 is a flow chart of method 800 for receiving digital video signals on a legacy analog television using a legacy television dongle, according to an embodiment of the invention. Method 800 begins in step 810. In step 810 a digital wireless signal is received. For example, IEEE 802.11(b) interface 720 or Bluetooth interface 730 can receive an encoded video signal from an integrated control system, such as integrated control system 200.

In step 820 the digital wireless signal is decoded. In one embodiment, video transcoder 710 can decode the received signal. In step 830 an analog video signal is encoded. For example, transcoder 710 can generate an analog video signal based on the receive signal. In step 840 the analog video signal is transmitted over a UHF/VHF interface. For example, transcoder 710 can provide the analog video signal to UHF/VHF interface 740. In step 850, method 800 ends.

### Conclusion

While various embodiments of the present invention have been described above, it should be understood that they have been presented by way of example, and not limitation. It will be apparent to persons skilled in the relevant art that various changes in form and detail can be made therein without departing from the spirit and scope of the invention.

The present invention has been described above with the aid of functional building blocks and method steps illustrating the performance of specified functions and relationships thereof. The boundaries of these functional building blocks and method steps have been arbitrarily defined herein for the convenience of the description. Alternate boundaries can be defined so long as the specified functions and relationships thereof are appropriately performed. Any such alternate boundaries are thus within the scope and spirit of the claimed invention. One skilled in the art will recognize that these functional building blocks can be implemented by discrete components, application specific integrated circuits, processors executing appropriate software and the like or any combination thereof. Thus, the breadth and scope of the present invention should not be limited by any of the above-described exemplary embodiments, but should be defined only in accordance with the following claims and their equivalents.

## Claims

1. An integrated control system for control of distributed home entertainment electronic devices, comprising:
a controller for managing the operation of said integrated control system;
a translator coupled to said controller for translating management instructions into management messages using a preferred communications protocol;
a device database coupled to said controller for storing device information;
at least one communications interface coupled to said controller for transmitting and receiving management messages to distributed home entertainment electronic devices.

2. The integrated control system of claim 1, wherein said at least one communications interface includes a wireless interface.

3. The integrated control system of claim 2, wherein said at least one communications interface includes an IEEE 802.11 (b) interface.

4. A method to control distributed home entertainment electronic devices, comprising:
(a) receiving a remote control signal;
(b) interpretting said remote control signal;
(c) gathering device information for devices impacted by said remote control signal;
(d) translating said remote control signal into a management command;
(e) encoding a management message based on the management command; and
(f) transmitting said management message.

5. A method to provide hierarchical control of distributed home entertainment electronic devices, comprising:
(a) receiving a remote control signal;
(b) interpreting said remote control signal;
(c) gathering device configuration information for devices that may be impacted by said remote control signal;
(d) determining management command based on said remote control signal and said device configuration information;
(e) encoding a management message based on said management command; and
(f) transmitting said management message.

6. Within a home entertainment system containing a television and other distributed electronic devices, a method of automatically configuring the distributed electronic devices upon a change in a video input signal; comprising
(a) determining a change in a video input signal;
(b) analyzing the characteristics of the video input signal;
(c) determining whether settings of the distributed electronic device should be changed;
(d) when settings should be changed, generating management messages for each device to be changed; and
(e) transmitting said management messages.

7. A method for distributing video signals from a first electronic device receiving multiple video streams to a second electronic device, comprising:
(a) receiving a video channel request;
(b) encoding a video message that contains video from the requested video channel;
(c) transmitting the encoded video message from the first electronic device to the second electronic device.

8. A legacy television dongle, comprising:
a wireless interface for receiving digital video signals;
a UHF/VHF interface for transmitting analog video signals to a legacy television;
a remote interface for receiving user commands; and
a video transcoder coupled to said digital video interface, said UHFNHF interface and said remote interface for converting video signals between different formats.

9. A legacy television dongle, comprising:
a wireless interface for receiving digital video signals;
a UHF/VHF interface for transmitting analog video signals to a legacy television;
a remote interface for receiving user commands; and
a video transcoder coupled to said digital video interface, said UHF/VHF interface and said remote interface;
a control signal transcoder coupled to said remote interface and said wireless interface; and
a control signal database coupled to said control signal transcoder.

10. A method of receiving digital video signals on a legacy analog television using a legacy television dongle, comprising:
(a) receiving a digital wireless video signal by the wireless legacy television dongle;
(b) decoding the digital wireless video signal;
(c) encoding an analog video signal from the digital wireless video signal; and
(d) transmitting the analog video signal from the wireless legacy television dongle to the legacy analog television using a UHFNHF interface.
